Europäisches Patentamt

(19) European Patent Office

Office européen des brevets

(11) Publication number : **0 294 898 B1**

## (12) EUROPEAN PATENT SPECIFICATION

(45) Date of publication of patent specification :
20.09.95 Bulletin 95/38

(51) Int. Cl.⁶ : **H04N 9/31**, G02F 1/136,
H04N 5/74

(21) Application number : 88201160.4

(22) Date of filing : 07.06.88

(54) Device for projection television.

(30) Priority : 10.06.87 NL 8701347
04.05.88 NL 8801165

(43) Date of publication of application :
14.12.88 Bulletin 88/50

(45) Publication of the grant of the patent :
20.09.95 Bulletin 95/38

(84) Designated Contracting States :
AT CH DE FR GB IT LI NL SE

(56) References cited :
EP-A- 0 034 409
EP-A- 0 034 796
EP-A- 0 283 290
US-A- 4 574 282

(56) References cited :
OPTICAL ENGINEERING, vol. 27, no. 1,
January 1988, pages 16-22, Society of Photo-
-Optical Instrumentation Engineers, Bellin-
gham, WA, US; J.A. CLARKE:"Current trends
in optics for projection TV".

(73) Proprietor : Philips Electronics N.V.
Groenewoudseweg 1
NL-5621 BA Eindhoven (NL)

(72) Inventor : Te Velde, Ties Siebolt
c/o INT. OCTROOIBUREAU B.V.
Prof. Holstlaan 6
NL-5656 AA Eindhoven (NL)

(74) Representative : Raap, Adriaan Yde et al
INTERNATIONAAL OCTROOIBUREAU B.V.,
Prof. Holstlaan 6
NL-5656 AA Eindhoven (NL)

## Description

The invention relates to a projection television comprising at least one light source whose light is incident on a liquid crystal display device comprising a layer of liquid crystalline material between a first transparent supporting plate and a second supporting plate, the first supporting plate having at least one transparent first control electrode and the second supporting plate being provided with a plurality of reflective picture electrodes defining rows and columns of picture elements which can be driven individually.

It is possible to display, for example, a television image by means of a matrix of picture elements which can be separately driven and which usually constitute such a display device.

For obtaining larger picture formats, the Article "LCD Full-colour Projector" by Morozumi et al, SID 86, page 375 proposes a projection system in which sub-pictures from three LCDs are imaged via a projection system on a screen. The LCDs are of the (twisted nematic) transparent type, and the picture electrodes are driven by means of TFT transistors.

The invention is based, inter alia on the recognition that such a set-up leads to unacceptably high light losses and notably in so-called high-definition television such a device is practically unusable.

The TFT transistors or other switching elements occupy a part of the surface of the picture elements and locally block the light beam to be passed. In a typical example the surface area of a picture element covers, for example $60 \times 80$ $(\mu m)^2$ and that of the switching elements covers $30 \times 40$ $(\mu m)^2$ which results in a transmission factor of at most 50%, also due to the presence of interconnection tracks. Moreover, due to internal reflections the transmission factor is further decreased and in practice it is less than 40%. These switching elements are usually made of amorphous silicon whose electrical behaviour is greatly dependent on incident light.

Applications of such a liquid crystal device in so-called high-definition projection TV (HD-MAC) will considerably raise the number of picture elements to be imaged in such a device.

When using a liquid crystal device to be imaged in the projection mode, it generally must not be much larger than the present-day slide format ($25 \times 36$ mm²) due to limitations imposed by the projection system. When using the number of lines (approximately 1250) and columns (approximately 1000) proposed for high-definition TV, this results in a dimension of approximately $30 \times 30$ $(\mu m)^2$ of the picture elements. Even with a considerable reduction of the surface area of the switching elements the transmission factor will then decrease to an unacceptable extent.

It is an object of the invention to provide a display device in which there is substantially no loss of light and which is fast enough to display rapidly varying images, notably if the picture frequency in future television systems is increased.

The invention is based, inter alia, on the recognition that these light losses can be reduced in a simple manner. It is also based on the recognition that, notably in the case of rapidly varying pictures or possibly higher future picture frequencies, faster liquid crystal effects must be used.

To this end a projection television according to the invention is characterized in that the layer of liquid crystalline material is switchable between a first and a second optical state such that for a beam to light with a central wavelength $\lambda_0$ incident on a picture element the effective difference in optical path length between its ordinary and extraordinary component in one of the two optical states differs substantially by $1/2 \lambda_0$ from said difference in the other of the two optical states, in that said second supporting plate is provided with a semiconductor body comprising a number of switching elements and in that said switching elements are covered by said picture electrodes.

EP-A-0 034 409 discloses a liquid crystal display system based on reflective dynamic scattering. This document, however, does not reveal nor does it suggest to cover switching elements within a semiconductor body which is present on the second supporting plate. It does not even disclose the presence of switching elements at all. US-A-4,574,281 describes the use of reflective picture electrodes in an electro-optical arrangement requiring coherent light generated by means of a laser. This document does not relate to an LC-display and particularly not to a projection television arrangement.

The layer of liquid crystalline material is switchable between both optical states in less than 10 ms and particularly in less than 5 ms.

The switching elements now do not have a detrimental influence on the effective surface area of the (reflective) picture elements. Therefore, such a device is very suitable for projection television used in the reflection mode.

The liquid crystal is preferably driven in such a way that it functions as a $1/2 \lambda$ plate in the case of full extinction.

A preferred embodiment of a projection television according to the invention is therefore characterized in that the layer of liquid crystalline material is switchable between two states via electric voltages on the picture electrodes and in that, dependent on the applied electric voltage, the device traverses a range of continuously decreasing or increasing values of reflection between a first state, in which the molecules of the liquid crystalline material have a first direction of orientation, and a second state, in which the molecules of the liquid crystalline material have a second direction of orientation which is substantially perpendicular to the first direction of orientation, the effective difference in the optical path length being sub-

stantially $1/2 \lambda_0$ for an incident light beam having a central wavelength $\lambda_0$.

An embodiment which is very suitable for colour projection television is characterized in that the device comprises three light sources emitting beams at central wavelengths $\lambda_1, \lambda_2, \lambda_3$, each beam being incident upon a display device, whereafter the reflected and modulated beams are combined to one image in a projection plane.

As has been stated, the projection system imposes requirements on the maximum size of the part to be imaged of the display device. This is preferably not larger than $(6 \times 6)$ cm$^2$, whilst the present-day slide format $(24 \times 36$ mm$^2)$ is eminently suitable.

The number of picture elements to be imaged is dependent on the high-definition television standard used and may be, for example 200,000 but it may also increase to 1,200,000 or more.

For the liquid crystal effect, for example, a planar anisotropic effect may be used as described in Application no. EP-A-0 294 899 filed simultaneously, but alternatively ferro-electric liquid crystals are eminently suitable.

The ferro-electric materials are notably very fast, with switching times of less than 60 $\mu$sec, while the application of positive anisotropy when using very thin liquid crystal layers reduces the switching times to several milliseconds.

The uniformity in the thickness of the layer of liquid crystal material desired for these effects may be obtained, for example by means of the method as described in the non pre-published Patent Application EP-A-0 294 900 or by means of a supporting plate provided with spacers obtained by etching from a uniform layer, whilst the two supporting plates are held together by pressure means.

To increase the reflective power, the second supporting plate is preferably provided with an additional reflective layer (dielectric mirror) covering the picture electrodes and (possible) intermediate parts of the semiconductor material. The intermediate semiconductor material is then also shielded from incident light.

One semiconductor substrate provided with drive circuits is preferably chosen for the second supporting plate. This is described more fully in Application no. EP-A-0 294 899 filed simultaneously.

The invention will now be described in greater detail, by way of example, with reference to the accompanying drawing in which

Fig. 1 shows diagrammatically a first embodiment of a device according to the invention and

Fig. 2 shows diagrammatically a modification thereof.

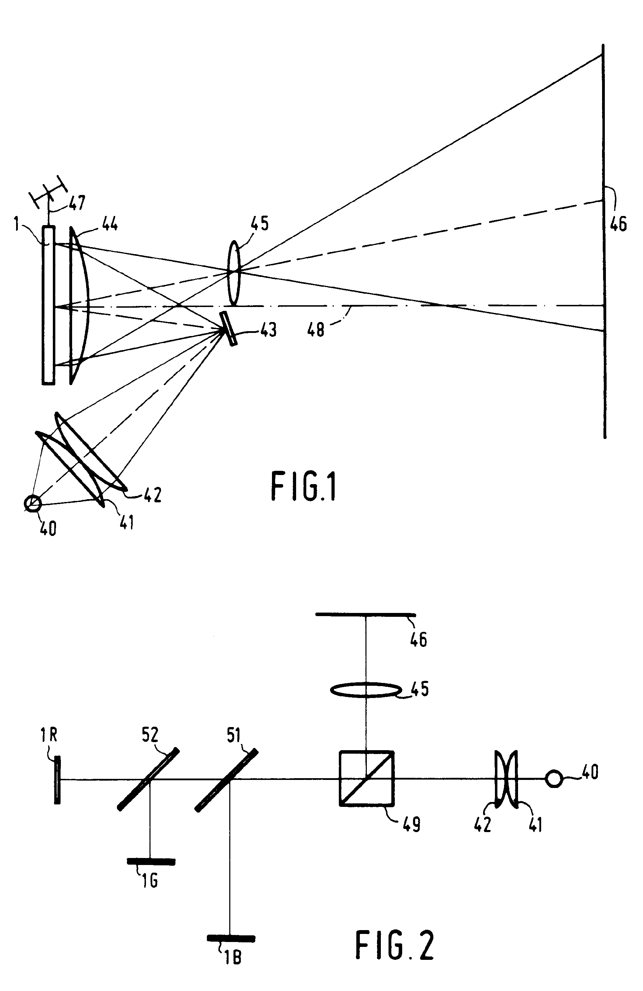

Fig. 1 shows diagrammatically a projection device realised with a liquid crystal device 1, for example a ferro-electric liquid crystal or a liquid crystal having a positive dielectric anisotropy as described in Application no. EP-A-0 294 899 filed simultaneously.

A lamp 40 (shown diagrammatically) emits a light beam which after having passed collimator lenses 41, 42 impinges upon a mirror 43 and is thereby reflected through a small angle with respect to the normal 48 in the direction of the liquid crystal device 1.

The light reaches the reflective electrodes of the semiconductor device via a planoconvex lens 44, which electrodes determine the state of the liquid crystal (reflective or not reflective) under the influence of control electronics. The reflected part comprises, for example 1000 x 1200 picture elements and has a surface area of approximately $(24 \times 36)$mm$^2$. The information may be, for example a TV signal shown diagrammatically by means of the aerial symbol 41.

After reflection the beam leaves the device 1 at a small angle with respect to the normal 48 and reaches the image plane 46 via the planoconvex lens 44 and a second lens 45. This plane may coincide, for example with a projection screen. The polariser and analyser are present, for example, between the mirror 43 and the planoconvex lens 44 and between the lenses 44 and 45, respectively.

For colour display Fig. 1 shows the addition for one of three coincident colours, for example blue, green and red. The source then preferably emits a spectrum at a central wavelength $\lambda i$ ($i = 1,2,3$) whilst $\dfrac{\lambda i}{4\Delta n}$ is preferably chosen for the thickness d.

Fig. 2 shows a device in which light from the lamp 40 is incident via condensor lenses 41, 42 on a beam splitter 49 which passes polarised light. This polarised light is incident on the devices $1^R$, $1^B$, $1^G$ via dichroic mirrors 51, 52, which devices are driven in such a way that the red, blue and green sub-pictures, respectively, are generated. Mirror 51 reflects, for example blue light which impinges upon the device $1^B$ and passes red and green light. Mirror 52 reflects green light impinging upon device $1^G$ and passes red light impinging upon device $1^R$. Dependent on the voltages applied to electrodes in the devices $1^R$, $1^G$, $1^B$ this light is not reflected, entirely reflected or partly reflected, whilst the direction of polarisation may change. If the polarisation is not changed the reflected light is passed back to the source 40 via the mirrors 51, 52 and the beam splitter 49. In the case of birefringence in one or more of the devices 1 the reflected light comprises components having a direction of polarisation which is perpendicular to that of the original beam. This reflected light is reflected in the beam splitter 49 in the direction of the lens 45 so that an image is obtained on a screen 46. The optical distances between the devices $1^R$, $1^G$, $1^B$ and the lens 45 are chosen to be equal.

## Claims

1. A projection television comprising at least one light source whose light is incident on a liquid crystal display device comprising a layer of liquid crystalline material between a first transparent supporting plate and a second supporting plate, the first supporting plate having at least one transparent first control electrode and the second supporting plate being provided with a plurality of reflective picture electrodes defining rows and columns of picture elements which can be driven individually, characterized in that the layer of liquid crystalline material is switchable between a first and a second optical state such that for a beam of light with a central wavelength $\lambda_0$ incident on a picture element the effective difference in optical path length between its ordinary and extraordinary component in one of the two optical states differs substantially by $\frac{1}{2}.\lambda_0$ from said difference in the other of the two optical states, in that said second supporting plate is provided with a semiconductor body comprising a number of switching elements and in that said switching elements are covered by said picture electrodes.

2. A projection television as claimed in claim 1, characterized in that the layer of liquid crystalline material is switchable between both optical states in less than 10 ms and particularly in less than 5 ms.

3. A projection television as claimed in claim 1 or 2, characterized in that it comprises three light sources emitting beams of light, each beam being incident upon a display device at central wavelengths $\lambda_0^1$, $\lambda_0^2$, $\lambda_0^3$ respectively, at least during operation, the reflected and modulated beams being combined to a single image in a projections plane.

4. A projection television as claimed in any one of the preceding claims, characterized in that the layer of liquid crystalline material is switchable between two states via electric voltages on the picture electrodes and in that, dependent on the applied electric voltage, the display device traverses a range of continuously decreasing or increasing values of reflection between a first state, in which the molecules of the liquid crystalline material have a first direction of orientation, and a second state, in which the molecules of the liquid crystalline material have a second direction of orientation which is substantially perpendicular to the first direction of orientation, the effective difference in the optical path length being substantially $1/2 \lambda_0$ for an incident light beam having a central wavelength $\lambda_0$.

5. A projection television as claimed in any of the preceding claims, characterized in that the layer of liquid crystalline material comprises a ferroelectric liquid crystalline material which is switchable in less than 60 µs between the two different optical states.

## Patentansprüche

1. Projektionsfernsehgerät mit wenigstens einer Lichtquelle, deren Licht auf eine Flüssigkristall-Bildwiedergabeanordnung mit einer Schicht aus flüssigkristallinem Material zwischen einer ersten transparenten Trägerplatte und einer zweiten Trägerplatte fällt, wobei die erste Trägerplatte wenigstens eine transparente erste Steuerelektrode enthält und die zweite Trägerplatte mit einer Anzahl reflektierender Bildelektroden zum Definieren von Zeilen und Spalten von Bildelementen versehen ist, die einzeln steuerbar sind, dadurch gekennzeichnet, daß die Schicht auf flüssigkristallinem Material zwischen einem ersten und einem zweiten optischen Zustand derart schaltbar ist, daß für ein Lichtbündel mit einer zentralen Wellenlänge $\lambda_0$ auf ein Bildelement der wirkliche Unterschied in der optischen Weglänge zwischen seiner gewöhnlichen und außergewöhnlichen Komponente in einem der beiden optischen Zustände sich im wesentlichen um $1/2 \lambda_0$ vom Unterschied im anderen der zwei optischen Zustände unterscheidet, daß die zweite Trägerplatte mit einem Halbleiterkörper versehen ist, der eine Anzahl von Schaltelementen enthält, und daß die Schaltelemente von diesen Bildelektroden bedeckt werden.

2. Projektionsfernsehgerät nach Anspruch 1, dadurch gekennzeichnet, daß die Schicht aus flüssigkristallinem Material zwischen beiden optischen Zuständen in weniger als 10 ms. und insbesondere in weniger als 5 ms. schaltbar ist.

3. Projektionsfernsehgerät nach Anspruch 1 oder 2, dadurch gekennzeichnet, daß es drei Lichtquellen enthält, die Lichtbündel emittieren, die auf eine Bildwiedergabeanordnung bei zentralen Wellenlängen $\lambda_0^1$ m $\lambda_0^2$ bzw. $\lambda_0^3$ wenigstens im Betrieb erreichen, wobei die reflektierten und modulierten Bündel zu einem einzigen Bild in einer Projektionsebene kombiniert werden.

4. Projektionsfernsehgerät nach einem oder mehreren der vorangehenden Ansprüche, dadurch gekennzeichnet, daß die Schicht aus flüssigkristallinem Material zwischen zwei Zuständen über elektrische Spannungen an den Bildelektroden schaltbar ist, und daß in Abhängigkeit von der an-

gelegten elektrischen Spannung die Bildwieder-
gabeanordnung einen Bereich ständig abfallen-
der oder ansteigender Reflexionswerte zwischen
einem ersten Zustand, in dem die Moleküle des
flüssigkristallinen Materials eine erste Orientationsrichtung haben, und einem zweiten Zustand
durchquert, in dem die Moleküle des flüssigkri-
stallinen Materials eine zweite Orientationsrich-
tung haben, die im wesentlichen senkrecht auf
der ersten Orientationsrichtung steht, und der
wirksame Unterschied in der optischen Weglänge im wesentlichen $1/2 \, \lambda_0$ für ein einfallendes
Lichtbündel mit einer zentralen Wellenlänge $\lambda_0$
ist.

5. Projektionsfernsehgerät nach einem oder mehreren der vorangehenden Ansprüche, dadurch gekennzeichnet, daß die Schicht aus flüssigkristal-
linem Material ein ferroelektrisches flüssigkristal-
lines Material enthält, das in weniger als 60 ms.
zwischen den zwei verschiedenen optischen Zuständen schaltbar ist.

**Revendications**

1. Dispositif de télévision par projection comprenant au moins une source de lumière dont la lumière frappe un dispositif d'affichage à cristaux
liquides comprenant une couche de cristaux liquides entre une première plaque de support transparente et une deuxième plaque de support, la
première plaque de support comportant au moins
une première électrode de commande transparente et la deuxième plaque de support étant
pourvue d'une pluralité d'électrodes d'image réfléchissantes définissant des rangées et des colonnes d'éléments d'image qui peuvent être
commandées individuellement, caractérisé en ce
que la couche de cristaux liquides peut être
commutée entre un premier état et un deuxième
état optique, de telle sorte que pour un faisceau
de lumière de longueur d'onde centrale $\lambda_0$ frap-
pant un élément d'image, la différence efficace
de la longueur de chemin optique entre sa
composante ordinaire et sa composante extraordinaire dans l'un des deux états optiques diffère
sensiblement de $1/2 \, \lambda_0$ vis-à-vis de ladite différence dans l'autre des deux états optiques, en ce
que ladite deuxième plaque de support est pourvue d'un corps semi-conducteur comprenant un
certain nombre d'éléments de commutation et en
ce que lesdits éléments de commutation sont recouverts par lesdites électrodes d'image.

2. Dispositif de télévision par projection selon la revendication 1, caractérisé en ce que la couche de
cristaux liquides peut être commutée entre les
deux états optiques en moins de 10 ms et en particulier en moins de 5 ms.

3. Dispositif de télévision par projection selon la revendication 1 ou 2, caractérisé en ce qu'il
comprend trois sources de lumière émettant des
faisceaux de lumière, chaque faisceau frappant
un dispositif d'affichage aux longueurs d'onde
centrales $\lambda_0^1$, $\lambda_0^2$, $\lambda_0^3$, respectivement, au moins
en cours de fonctionnement, les faisceaux réfléchis et modulés étant combinés pour former une
seule image dans un plan de projection.

4. Dispositif de télévision par projection selon l'une
quelconque des revendications précédentes, caractérisé en ce que la couche de cristaux liquides
peut être commutée entre deux états via des tensions électriques sur les électrodes d'image et en
ce que, en fonction de la tension électrique appliquée, le dispositif d'affichage parcourt une plage
de valeurs de réflexion croissant ou décroissant
en continu entre un premier état, dans lequel les
molécules de cristaux liquides ont une première
direction d'orientation, et un deuxième état, dans
lequel les molécules de cristaux liquides ont une
deuxième direction d'orientation qui est sensiblement perpendiculaire à la première direction
d'orientation, la différence efficace de la longueur de chemin optique étant sensiblement de
$1/2 \, \lambda_0$ pour un faisceau de lumière incident ayant
une longueur d'onde centrale de $\lambda_0$.

5. Dispositif de télévision par projection selon l'une
quelconque des revendications précédentes, caractérisé en ce que la couche de cristaux liquides
comprend des cristaux liquides ferroélectriques
qui peuvent être commutés en moins de 60 µs entre les deux états optiques différents.

FIG.1

FIG.2